# EUROPEAN PATENT SPECIFICATION

(11) **EP 1 456 325 B1**
(45) Date of publication and mention of the grant of the patent: **29.03.2006**
(21) Application number: 02790476.2
(22) Date of filing: 19.12.2002
(51) Int. Cl.: C10G 11/18, B01J 8/00, B01J 8/18, B01F 5/06, B05B 7/14

(54) **PROCESS TO REGENERATE SPENT FCC CATALYST**
VERFAHREN ZUR REGENERIERUNG VON GEBRAUCHTEM FCC KATALYSATOR
PROCEDE DE REGENERATION D'UN CATALYSEUR USE DE CRAQUAGE CATALYTIQUE FLUIDE

(30) Priority: 21.12.2001 US 344836 P
(43) Date of publication of application: 15.09.2004
(73) Proprietor: SHELL INTERNATIONALE RESEARCH MAATSCHAPPIJ B.V., 2596 HR Den Haag (NL)
(72) Inventor: CHEN, Ye-Mon, Sugar Land, TX 77479 (US); DRIES, Hubertus, Wilhelmus, Albertus, NL-1031 CM Amsterdam (NL); SAMSON, Rene, NL-1031 CM Amsterdam (NL)
(86) International application number: PCT/EP2002/013878
(87) International publication number: WO 2003/054115

(56) References cited:
- EP-A- 0 960 929
- WO-A-02/42394
- BE-A- 638 927
- US-A- 4 660 768
- US-B1- 6 221 318

## Description

The present invention is related to a Process to supply solid spent FCC catalyst particles to a fluidized bed via a riser which has a substantially vertical upper part terminating at an outlet opening in said fluidized bed and wherein the solid spent FCC catalyst particles are transported towards said fluidized bed in the riser with a lift gas, which lift gas and solid spent FCC catalyst particles are contacted at an upstream part of the riser. The invention is especially directed to a process for improving distributions of both spent catalyst and lift gas into a regenerator of a fluid catalytic cracking unit.

In a typical Fluid Catalytic Cracking Unit (FCCU) consisting of a regenerator, a riser reactor and a stripper, finely divided regenerated catalyst is drawn from the regenerator through the regenerator standpipe and contacts with a hydrocarbon feedstock in a lower portion of a reactor riser. Hydrocarbon feedstock and steam enter the riser through feed nozzles. The mixture of feed, steam and regenerated catalyst, which has a temperature of from about 200 °C to about 700 °C, passes up through the riser reactor; converting the feed into lighter products while a coke layer deposits on the surface of the catalyst, temporarily deactivating the catalyst. The hydrocarbon vapours and catalyst from the top of the riser are then passed through cyclones to separate spent catalyst from the hydrocarbon vapour product stream. The spent catalyst enters the stripper where steam is introduced to remove hydrocarbon products from the catalyst. The spent catalyst then passes through a spent catalyst transfer line to enter the regenerator where, in the presence of air and at a temperature of from about 620 °C to about 760 °C, the coke layer on the spent catalyst is combusted to restore the catalyst activity. Regeneration is performed in a fluidized bed. The regenerated catalyst is then drawn from the regenerator fluidized bed through the regenerator standpipe and, in repetition of the previously mentioned cycle, contacts the feedstock in the reactor riser.

Catalyst regeneration is a critical step in FCCU operation. The success of the step depends on the contacting efficiency between the spent catalyst and oxygen-containing gas in the regenerator. While the operation of an FCCU with a single catalyst inlet opening was acceptable for many years, the potential benefit of improving catalyst distribution in the regenerator has become apparent more recently. An ideal condition for catalyst distribution is that the time for distribution and mixing of catalyst should be less than that for coke combustion. As the regenerator diameter increases, the -radial mixing time of catalyst becomes longer. At the same time, as the regeneration temperature increases, the time required for combustion becomes shorter. Hence, the benefit of improving spent catalyst distribution is more significant for an FCCU comprising a regenerator vessel of large diameter or in which regeneration is conducted at higher temperature.

Another important aspect of the spent catalyst distribution is to control afterburn, which is characterized by substantial temperature increase in the dilute phase of the regenerator above the fluidized bed. If the lift gas, most commonly air, coming along with the spent catalyst is not well distributed, gas will form large bubbles at the discharge of the spent catalyst distributor, rising quickly through the fluidized bed with little time for combustion, and releasing oxygen-rich gas into the dilute phase. This leads to afterburn and poor combustion efficiency of the transport gas in the fluidized bed.

EP-A-622116 discloses a device which distributes spent catalyst and lift gas by means of a central vertical spent catalyst riser terminated with a junction connecting to multiple, horizontal conveying conduits and discharging catalyst at the ends of the horizontal conduits to discrete distribution points.

Although the above prior art device is directed at distributing spent catalyst as best as possible within the regenerator there is room for improvement in this respect.

It is an objective of the instant invention to improve solids distribution in a fluidized bed when supplying said solids. Another objective is to achieve this improvement while making use of the above and other prior art devices to supply spent catalyst to the fluidized bed wherein the device comprises a riser with a substantially vertical upper part.

This objective is achieved with the following process. Process to supply solid spent FCC catalyst particles to a fluidized bed via a riser which has a substantially vertical upper part terminating at an outlet opening in said fluidized bed and.wherein the solid spent FCC catalyst particles are transported towards said fluidized bed in the riser with a lift gas, which lift gas and solid spent FCC catalyst particles are contacted at an upstream part of the riser and wherein between said upstream part and the outlet opening the interior of the riser is provided with a plurality of axially spaced mixing elements.

Applicants have found that when such mixing elements are present in the riser according to the process of the invention an improved distribution of solids and lift gas in the fluidized bed is achieved. Furthermore the improvement can be achieved by making use of the spent catalyst inlet devices of the prior art. Thus by simple retrofitting the riser of these prior art devices an improved distribution can be achieved.

The mixing elements, which are present on the surface of the interior of the riser, will result in that the solids and gas will flow more evenly upwards through the riser. It has been found surprisingly that this more evenly flow through the whole length of the riser, which can range from 6 to 30 meters, would have such a major advantageous impact in the distribution of solids and gas in the fluidized bed in which gas and solids are dispersed into.

The mixing elements can be any extension of the interior of the riser wall towards the riser interior resulting in a smaller cross sectional opening than the opening at a point where no mixing element is present. Such a smaller opening will create turbulence and a higher local gas velocity resulting in local radial mixing of the gas-solids mixture flowing in the riser. The axial spacing of the mixing elements is not critical, usually it should be larger than the diameter of the riser. Examples of such devices are venturi shaped rings fixed on the interior of the riser. If a refractory is present in the riser it is preferred to use specially shaped refractory building blocks as mixing element. An example of such a mixing element is disclosed in US-A-3353925 and US-A-5851380 for a FCC reactor riser.

Preferably the mixing element has the shape of a segment of arc as described in WO-A-9814533. These mixing elements are preferred over the elements disclosed in US-A-3353925 and US-A-5851380 because the pressure drop over the length of the riser provided with such elements is lower. The mixing elements have the shape of a segment of arc and a rectangular cross-section. The horizontal penetration depth of the flat mixing element towards the center of the riser is equal to the rise of the segment of arc.

Suitably one to at most four arc shaped mixing elements can be positioned at a specific elevation in the riser. The arc shaped mixing elements can be arranged directly above another in the riser. However, suitably the arc shaped mixing element(s) is (are) arranged staggered with respect to the arc shaped mixing element(s) positioned just above or below said elements. For example if two opposite arc shaped mixing elements are used per elevation the adjacent mixing elements are suitably arranged perpendicular to each other. The angle need not be 90°, it can be any acute angle.

In addition, the flat mixing element(s) can further include a lip pointing inwards.

The central planes of the flat mixing elements 10 are arranged perpendicular to the central longitudinal axis of the riser. In an alternative embodiment the mixing elements can be arranged tilted downwards with respect to the central longitudinal axis of the riser 1. For example the angle between a central plane and the central longitudinal axis is between 5° and 20°.

In the riser a dilute phase fluidized bed will be present. Preferably the more dilute phase fluidized bed has a catalyst or solids density of below 500 kg/m³ and more preferably between 20 and 400 kg/m³. The superficial gas velocity in the more dilute-phase fluidized bed is preferably between 1.5 and 20 m/s.

At the upper end of the riser means to distribute the solids and the lift gas in the dense fluidized bed are suitably present. Such means may for example be a device as described in the above referred to EP-A-622116 or similar devices comprising outwardly conveying conduits to distribute the solids. A device found especially suitable is described in WO-A-242394 and is incorporated herein by reference. Such device comprises of:
a first disk surrounding the upper opening of the vertical riser at the uppermost end of said riser;
a second disk, spaced upwardly from, and rigidly connected to, said first disk, thereby forming a substantially open space therebetween;
a deflection cone attached, at its base, to said second disk, said deflection cone pointing downward and being centred over the outlet of said conduit, said deflection cone adapted to direct said spent catalyst and said transfer gas in a substantially uniform, radially outward direction through said space formed between said first disk and said second disk, thereby providing a continuous circumferential discharge of said mixture of solids and lift gas from the outer circumference of said space formed between said first disk and said second disk into said fluidised bed in a substantially uniform radially outward direction.

The lift gas may be any gaseous medium and the choice will depend on the process in which the invention is applied. When spent catalyst solids are supplied to a FCCU regenerator the lift gas may be for example steam or nitrogen. Preferably an oxygen containing gas, suitably air or oxygen-enriched air is used.

- When the process according to the present invention is used in a FCCU the solids will be catalyst suitably be conventional FCC catalyst as for example described in "Fluid catalytic cracking: Science and Technology", Ed. Magee J.S., Mitchell M.M.Jr., 1993, Elsevier Science Publishers B.V., pages 1-6. Additives, for example ZSM-5 or Zeolite Beta containing additives, to enhance propene selectivity may also be present.

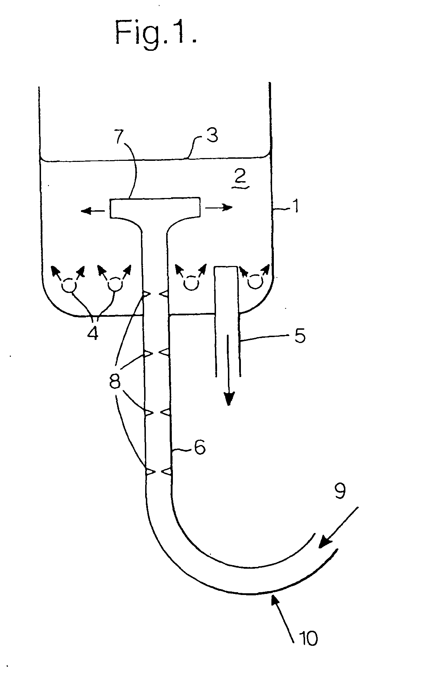

The invention shall be further illustrated by means of Figure 1.

Figure 1 shows the lower end of a FCCU regenerator vessel (1) comprising of a fluidized bed (2) of catalyst particles, an upper fluidized bed level (3), means to add fluidizing gas (4), a catalyst discharge conduit (5) for discharge of regenerated catalyst particles and means to supply spent catalyst via a riser (6) having a substantially vertical upper part. Riser (6) is provided at its upper end with means (7) to evenly discharge catalyst and lift gas in the fluidized bed (2). These means are thus located below upper bed level (3). The riser is provided with axially spaced mixing elements (8). At the lower end of said riser (6) spent catalyst, as discharged from a FCC stripper (not shown) via (9), and lift gas as provided at inlet point (10) is mixed.

## Claims

1. Process to supply solid spent FCC catalyst particles to a fluidized bed via a riser which has a substantially vertical upper part terminating at an outlet opening in said fluidized bed and wherein the solid spent FCC catalyst particles are transported towards said fluidized bed in the riser with a lift gas, which lift gas and solid spent FCC catalyst particles are contacted at an upstream part of the riser and wherein between said upstream part and the outlet opening the interior of the riser is provided with a plurality of axially spaced mixing elements.

2. Process according to claim 1, wherein the mixing element has the shape of a segment of arc.

3. Process according to any one of claims 1-2, wherein
a first disk surrounds the upper opening of the riser at the uppermost end of said riser;
a second disk, is spaced upwardly from, and rigidly connected to, said first disk, thereby forming a substantially open space therebetween;
a deflection cone is attached, at its base, to said second disk, said deflection cone pointing downward and being centred over the outlet of said conduit, said deflection cone adapted to direct said spent catalyst and said transfer gas in a substantially uniform, radially outward direction through said space formed between said first disk and said second disk, thereby providing a continuous circumferential discharge of said mixture of solids and lift gas from the outer circumference of said space formed between said first disk and said second disk into said fluidised bed in a substantially uniform radially outward direction.

4. Process according to any one of claims 1-3, wherein the solid spent FCC catalyst particles are supplied to a fluidized regenerator bed.

5. Process according to claim 4, wherein the lift gas is air.

## Patentansprüche

1. Verfahren zum Zuführen von festen verbrauchten FCC-Katalysatorteilchen zu einem Fließbett über ein Steigrohr, das einen im wesentlichen vertikalen oberen Teil aufweist, der in einer Auslaßöffnung im Fließbett endet und worin die festen verbrauchten FCC-Katalysatorteilchen in dem Steigrohr mit einem Liftgas zu dem Fließbett transportiert werden, welches Liftgas und welche festen verbrauchten FCC-Katalysatorteilchen in einem stromaufwärtigen Teil des Steigrohres in Kontakt gebracht werden und worin zwischen dem stromaufwärtigen Teil und der Auslaßöffnung das Steigrohrinnere mit einer Anzahl von axial beabstandeten Mischelementen ausgerüstet ist.

2. Verfahren nach Anspruch 1, worin das Mischelement die Form eines Bogensegmentes aufweist.

3. Verfahren nach einem der Ansprüche 1 bis 2, worin
eine erste Scheibe die obere Öffnung des Steigrohres am obersten Ende des Steigrohres umgibt;
eine zweite Scheibe oberhalb der ersten Scheibe angeordnet und mit dieser starr verbunden ist, wodurch dazwischen ein im wesentlichen offener Raum ausgebildet wird;
ein Ablenkkegel an seiner Basis mit der zweiten Scheibe verbunden ist, wobei der Ablenkkegel nach unten weist und über dem Auslaß der Leitung zentriert ist, wobei der Ablenkkegel dazu geeignet ist, den verbrauchten Katalysator und das Transfergas in einer im wesentlichen gleichförmigen, radial nach außen gerichteten Richtung durch den zwischen der ersten und der zweiten Scheibe gebildeten Raum zu lenken, wodurch eine kontinuierliche Ringsum-Abgabe des Gemisches aus Feststoffen und Liftgas aus dem Außenumfang des zwischen der ersten und der zweiten Scheibe gebildeten Raumes in das Fließbett hinein in einer im wesentlichen gleichmäßigen, radial auswärts gerichteten Richtung geschaffen wird.

4. Verfahren nach einem der Ansprüche 1 bis 3, worin die festen verbrauchten FCC-Katalysatorteilchen einem Regenerator-Fließbett zugeführt werden.

5. Verfahren nach Anspruch 4, worin das Liftgas Luft ist.

## Revendications

1. Procédé pour délivrer des particules solides de catalyseur épuisé de craquage catalytique d'un fluide ("fluid catalytic cracking" - FCC) dans un lit fluidisé une colonne dont la partie supérieure est essentiellement verticale et se termine dans une ouverture qui débouche dans ledit lit fluidisé, un gaz de fluidisation transportant les particules solides de catalyseur épuisé de FCC dans la colonne vers ledit lit fluidisé, le gaz de fluidisation et les particules solides de catalyseur épuisé de FCC étant mis en contact dans la partie amont de la colonne, l'intérieur de la colonne étant doté de plusieurs éléments de mélange espacés les uns des autres dans la direction axiale entre ladite partie amont et l'ouverture de décharge.

2. Procédé selon la revendication 1, dans lequel l'élément de mélange a la forme d'un arc de cercle.

3. Procédé selon l'une quelconque des revendications 1 à 2, dans lequel :
un premier disque situé à l'extrémité supérieure de ladite colonne entoure l'ouverture supérieure de la colonne et, un deuxième disque est disposé au-dessus et à distance dudit premier disque et y est relié fixement, ce qui permet de former un espace essentiellement ouvert entre ces derniers et un cône de déflexion dont la base est fixée sur le deuxième disque, ledit cône de déflexion étant orienté vers le bas et étant centré sur la sortie de ladite colonne, ledit cône de déflexion permettant de diriger ledit catalyseur épuisé et ledit gaz de transfert dans une direction orientée radialement vers l'extérieur et de manière essentiellement uniforme dans ledit espace formé entre ledit premier disque et ledit deuxième disque, ce qui permet de décharger dans une direction orientée radialement vers l'extérieur et de manière essentiellement uniforme, périphérique et continue ledit mélange de solides et de gaz de fluidisation par la périphérie extérieure dudit espace formé dans ledit lit fluidisé entre ledit premier disque et ledit deuxième disque.

4. Procédé selon l'une quelconque des revendications 1 à 3, dans lequel les particules solides de catalyseur épuisé de FCC sont délivrées dans le lit fluidisé d'un régénérateur.

5. Procédé selon la revendication 4, dans lequel le gaz de fluidisation est l'air.
